# EUROPÄISCHE PATENTSCHRIFT

(11) **EP 3 920 712 B1**
(45) Veröffentlichungstag und Bekanntmachung des Hinweises auf die Patenterteilung: **07.05.2025**
(21) Anmeldenummer: 20704013.0
(22) Anmeldetag: 07.02.2020
(51) Int. Cl.: A23C 3/02, A23C 9/152

(54) **VERFAHREN ZUM HERSTELLEN EINES KALTEN MILCH-MISCHGETRÄNKS**
METHOD FOR PRODUCING A COLD MIXED MILK DRINK
PROCÉDÉ DE FABRICATION D'UNE BOISSON LACTÉE MÉLANGÉE FROIDE

(30) Priorität: 08.02.2019 CH 1572019
(43) Veröffentlichungstag der Anmeldung: 15.12.2021
(73) Patentinhaber: Emmi Schweiz AG, 6005 Luzern (CH)
(72) Erfinder: GMÜR, Remo, 6005 Luzern (CH); KOHLER, Martina, 6006 Luzern (CH); LAUBER, Isidor, 6022 Grosswangen (CH); SIEBER, Christine, 5272 Gansingen (CH); WALLISER, Roger, 3262 Suberg (CH); WASSERFALLEN, Armin, 3250 Lyss (CH); BARTLOMÉ, Walter, 1657 Abländschen (CH); BÜELER, Thomas, 5603 Staufen (CH); HOFER, Alfred Hans, 4441 Thürnen (CH); SCHÄFER, Georg, 6242 Wauwil (CH)
(74) Vertreter: Troesch Scheidegger Werner AG
(86) Internationale Anmeldenummer: PCT/EP2020/053102
(87) Internationale Veröffentlichungsnummer: WO 2020/161286

(56) Entgegenhaltungen:
- EP-A2- 2 783 573
- WO-A1-2007/144333
- WO-A2-2012/017043
- DE-A1- 2 828 582
- JP-A- S63 157 931
- US-A1- 2002 176 922

## Beschreibung

### TECHNISCHES GEBIET DER ERFINDUNG

Die vorliegende Erfindung betrifft ein Verfahren zum Herstellen eines kalten Mischgetränks aus Milch und einer sauren Komponente.

### BESCHREIBUNG

Kalte Milch-Mischgetränke werden bereits seit längerer Zeit auf dem Markt angeboten. Häufig werden solchen Mischgetränken Zusätze wie Stabilisatoren, Emulgatoren, Säureregulatoren und/oder Bindemittel zugesetzt. Solche Zusätze sollen ein Milch-Mischgetränk hinsichtlich seiner Konsistenz und Eigenschaften stabilisieren. Säureregulatoren werden beispielsweise bei der Herstellung eines Gemischs aus Milch und einer sauren Zutat eingesetzt, um Ausflockungen bei der Herstellung oder bei der Lagerung zu verhindern. So kann ein entsprechendes Milchprodukt auch über einen längeren Zeitraum seine ursprüngliche Konsistenz im Wesentlichen beibehalten.

In der letzten Zeit geht der Trend auch in der Lebensmittelindustrie dahin, Produkte mit möglichst wenig Zusätzen anzubieten. Soll jedoch die Milch mit einer sauren Komponente wie beispielsweise Kaffee gemischt werden, besteht die Herausforderung dahin, den Effekten zum Beispiel durch den Säuregehalt des Kaffees und/oder der hohen Temperatur von frisch aufgebrühtem Kaffee in einer alternativen Art und Weise entgegenzutreten und ungewollte Ausflockungen während der Herstellung und/oder der Lagerung zu verhindern. WO 2012/017043 betrifft einen Getränkeprodukt, das ein teilweise denaturiertes Proteinsystem einschließlich Kappa-Casein und Beta-Lactoglobulin umfasst, wobei das Produkt einen pH-Wert zwischen 5,6 und 6,3, vorzugsweise zwischen 5,8 und 6,3, aufweist.

### ZUSAMMENFASSUNG DER ERFINDUNG

Es ist Aufgabe der vorliegenden Erfindung, ein alternatives Verfahren bereitzustellen, mit welchem ein Mischgetränk aus Milch und einer sauren Komponente mit möglichst geringer Ausflockung hergestellt und gelagert werden kann.

Die Aufgabe wird durch ein Verfahren zum Herstellen eines kalten Mischgetränks aus Milch und einer sauren Komponente gelöst, welches die folgenden Schritte in dieser Reihenfolge umfasst:
Einen Denaturierungsschritt der Milch. Dabei wird die Milch vor dem Mischen mit einer sauren Komponente auf eine Denaturierungstemperatur T_{DENAT} erhitzt. Die Denaturierungstemperatur T_{DENAT} liegt dabei in einem Bereich von 72 °C bis 155 °C. Die so erhitzte Milch wird bei der Denaturierungstemperatur T_{DENAT} für eine Denaturierungszeit t_{DENAT} gehalten, welche in einem Bereich von 30 Sek bis 1 h liegt.

Anschliessend wird die denaturierte Milch mit einer sauren Komponente gemischt.

Das Gemisch aus der Milch und der sauren Komponente wird anschliessend zur Erhöhung der Haltbarkeit hitzebehandelt. Hierzu wird das Gemisch auf eine Temperatur T_{HALT} erhitzt, die in einem Bereich von 63 °C und 155 °C liegt, und das Gemisch wird bei der Temperatur T_{HALT} für eine Hitzebehandlungszeit t_{HALT} gehalten.

Anschliessend erfolgt ein Homogenisieren des hitzebehandelten Gemischs bei einem Homogenisierungsdruck p_{HOM}, der in einem Bereich von 75 bar bis 275 bar liegt, und nach dem Homogenisieren wird das Gemisch abgekühlt auf eine Temperatur, die in einem Bereich von 4°C bis 25°C liegt.

Die Milch und die saure Komponente werden dabei in einem solchen Mischungsverhältnis gemischt, dass das Gemisch nach der Homogenisierung und dem Abkühlen einen pH-Wert aufweist, der in einem Bereich von 5,8 und 7,0 liegt.

Mit dem Verfahren kann Milch mit einer sauren Komponente gemischt werden, ohne dass bei dem Mischen beziehungsweise dem Herstellungsprozess signifikante Ausflockungen gebildet werden.

Es hat sich dabei herausgestellt, dass insbesondere durch einen dem Mischen vorangeschalteten Denaturierungsschritt der Milch - also ohne die saure Komponente - ein entsprechendes kaltes Milchmischgetränk hergestellt werden kann, welches stabil gegenüber potentiellen Ausflockungen bei der Herstellung und bei der Lagerung ist. Wird also die Milch einem separaten Denaturierungsschritt wie hier beschrieben unterzogen, kann die Milch ohne Gefahr von Ausflockungen mit einer sauren Komponente und gegebenenfalls, falls es produktionstechnisch und/oder energetisch gewünscht ist, sogar unter erhöhten Temperaturbedingungen gemischt werden. Das Gemisch kann dann als solches einer gemeinsamen Hitzebehandlung unterzogen werden, wie sie zur Haltbarmachung notwendig ist, und schliesslich vor der Lagerung als fertiges Produkt homogenisiert werden. Es wird gegenwärtig angenommen, dass durch den separaten Denaturierungsschritt der Milch der Anteil nativer Milchproteine verringert wird und so entsprechend weniger ausflockbare Anteile in der Milch bereits beim Mischen vorliegen.

Das hier beschriebene Verfahren kann es erlauben, dass insbesondere auf den Einsatz von Säureregulatoren verzichtet werden kann. Solche Säureregulatoren werden in herkömmlichen Verfahren insbesondere dann eingesetzt, wenn eine saure Komponente zu Milch zugegeben werden muss, und dienen der Stabilisierung des pH-Wertes und sollen damit letztendlich einem Ausflocken von Milchproteinen durch die saure Komponente entgegenwirken.

Das hier beschriebene Verfahren kann zudem erlauben, dass weitere Zusätze wie Stabilisatoren, Emulgatoren und/oder Bindemittel ebenfalls nicht zum Einsatz kommen müssen, da schon allein durch die zuvor beschriebene Abfolge von Temperatur- und Druckbehandlungen der verschiedenen Zutaten ein stabiles Milch-Mischgetränk hergestellt werden kann.

Ein Gemisch mit einem End-pH-Wert in einem Bereich von 5,8 bis 7,0 hat sich als geeignet herausgestellt, ein allein durch die Wahl der Verfahrensparameter hinsichtlich Ausflockungen stabiles Endprodukt herzustellen. Unter einem Endprodukt wird hier das fertige Produkt verstanden, wie es abgefüllt und schliesslich im Geschäft verkauft wird. Ist der End-pH-Wert zu tief, erhöht sich wieder die Gefahr der unerwünschten Ausflockungen bei der Herstellung und/oder bei der Lagerung.

Der Denaturierungsschritt der Milch kann beispielsweise in einem auf die Denaturierungstemperatur T_{DENAT} beheizbaren Tank oder in einem Wärmetauscher, wie einem Platten- oder Röhrenwärmetauscher erfolgen.

Die Hitzebehandlung des Gemischs aus Milch aus dem Denaturierungsschritt und der sauren Komponente dient der Erhöhung der Haltbarkeit, wie für den Verkauf von leicht verderblichen, natürlichen Milchprodukten nötig ist. Sie kann beispielsweise direkt mittels Infusion oder Uperisation, oder indirekt beispielsweise mittels Röhren- oder Plattenwärmetauscher erfolgen. Je nach Art der Hitzebehandlung, also beispielsweise eine Pasteurisierung bzw. Hochpasteurisierung oder eine Ultrahocherhitzung, kann das entsprechend geeignete Gerät bzw. die entsprechend geeignete Anlage ausgewählt werden.

Die Homogenisierung von Milch oder von Milchgemischen kann in jedem geeigneten Homogenisator erfolgen, beispielsweise in einem zweistufigen Kolben-Homogenisator. Die hier gemachten Druckangaben entsprechen jeweils dem angewendeten Totaldruck bei der Homogenisierung.

Es kann nötig sein, dass das Gemisch für die Homogenisierung nach der Hitzebehandlung auf eine Homogenisierungstemperatur T_{HOM} abgekühlt werden muss.

Das Abkühlen kann passiv erfolgen, indem das homogenisierte Gemisch in einen Lagerraum mit der gewünschten Temperatur transferiert und dort belassen wird, so dass es sich mit der Zeit auf die Temperatur des Lagerraums abkühlt. Es ist jedoch besonders vorteilhaft, das hitzebehandelte und homogenisierte Gemisch aktiv abzukühlen, beispielsweise mit einem Wärmetauscher, wie einem Platten- oder Röhrenwärmetauscher.

Die Temperatur, auf welche das nun hitzebehandelte und homogenisierte Gemisch schliesslich abgekühlt wird, kann beispielsweise der Lagertemperatur entsprechen, bei welcher das Gemisch anschliessend bis zum Abfüllen gelagert werden soll. Die Lagertemperatur wiederum ist beispielsweise abhängig von der Art des Gemischs und der Hitzebehandlung, die zur Erhöhung der Haltbarkeit des Gemischs durchgeführt wurde. Beispielsweise kann ein ultrahocherhitztes Gemisch bei einer höheren Temperatur, zum Beispiel Raumtemperatur, gelagert werden, sofern die Lagerung in keimfreier Umgebung erfolgt. Ein pasteurisiertes Gemisch hingegen kann eine Lagerung bei niedrigeren Temperaturen erfordern, beispielsweise bei 4 °C bis 12 °C. Auch hier gilt, dass die Lagerung, wenn nötig, in einer keimfreien Umgebung erfolgt, um eine Rekontamination zu vermeiden.

Geeignet ist beispielsweise eine Lagerung in einem Steriltank. Die Verwendung eines solchen Steriltank ist besonders geeignet, um eine Rekontamination zu vermeiden, da er selbst so behandelt ist, dass er keimfrei, also steril ist.

Unter Mischen wird hier der Mischprozess der Milch aus dem Denaturierungsschritt und der sauren Komponente verstanden. Das Zuführen beispielsweise von geschmacksgebenden Stoffen und/oder anderen Zutaten wird vielmehr als Zuführen verstanden und nicht als Mischen. Es kann vorgesehen sein, dass zum Mischen die Milch und die saure Komponente beispielsweise auf die gleiche Temperatur gebracht werden. Es hat sich jedoch gezeigt, dass aufgrund der separaten Denaturierungsbehandlung der Milch die Temperatur, bei welcher gemischt wird, keinen bzw. keinen signifikanten und damit vernachlässigbaren Einfluss auf die Stabilität des erzeugten Milch-Mischgetränks hat. Die Wahl der Temperaturen der Milch und der sauren Komponente kann daher auch unter prozess- und energietechnischen Aspekten abgestimmt werden.

Im Zusammenhang mit der vorliegenden Erfindung wird unter Milch eine auf Milch basierende Flüssigkomponente verstanden. Man kann in diesem Sinne auch von der Milchkomponente sprechen. Milch kann dabei beispielsweise sein: Vollmilch, Magermilch, teilentrahmte Milch, im Fettgehalt standardisierte Milch, Rahm, oder Kombinationen davon. Unter im Fettgehalt standardisierte Milch wird üblicherweise ein Gemisch aus teilentrahmter Milch oder Magermilch und Rahm verstanden. Magermilch hat zum Beispiel typischerweise einen Fettgehalt von circa 0,05 % und Rahm einen Fettgehalt von 37 %. Durch die Wahl eines entsprechenden Mischungsverhältnisses der verschiedenen Ausgangsmilchsorten kann gezielt und reproduzierbar ein gewünschter Fettanteil der Milchkomponente eingestellt werden. Milch kann beispielsweise ebenfalls eine oder mehrere Milchfraktionen oder eine Milchaufbereitung sein. Unter einer Milchfraktion wird hier eine Fraktion von Milch verstanden, die mittels eines Trennverfahrens wie beispielsweise einer Filtration und/oder einer Zentrifugation erhalten wird. Beispiele sind Molke oder Buttermilch oder Bestandteile einer solchen Fraktion wie Milchproteine oder Milchfette. Die Milchfraktion kann beispielsweise als Pulver oder flüssig vorliegen. Milch kann ebenfalls eine Kombination von einer oder mehreren der oben erwähnten Sorten der Milch mit einer oder mehreren Milchfraktionen sein.

Die Milch kann beispielsweise zudem bereits vor dem Mischen einer Behandlung zum Reduzieren des Lactose-Gehalts unterzogen worden sein, oder eine solche Behandlung erfolgt am Gemisch nach dem Homogenisierungsschritt und/oder nach dem Abkühlschritt sofern keine Rekontamination erfolgen kann. Dazu kann beispielsweise der Milch Lactase zugegeben werden, oder Lactase wird nach dem Homogenisierungsschritt und vor dem Lagern dem Gemisch zugegeben.

Die Milch kann vor dem Beginn des Denaturierungsschritts vorgelagert werden, und zum gewünschten Beginn der Denaturierung in das Verfahren gebracht werden. Gegebenenfalls kann, wie später beschrieben, die Milch aus der Vorlagerung zunächst einer Vorhomogenisierung unterzogen werden. Geeignete Lagertemperaturen für die vorgelagerte Milch liegen in einem Bereich von 4°C bis 8 °C.

Unter geschmacksgebenden Stoffen sind beispielsweise Zucker oder Zuckerarten wie z.B. Caramelzuckersirup, Glukosesirup, Maltodextrin, Honig, Agavensirup sowie Zubereitungen daraus, Süssstoffe, Kakaopulver, Schokopulver, und andere Aromastoffe zu verstehen. Solche Aromastoffe können Aromen, natürliche Aromen, aromagebende Stoffe, Aromaextrakte, künstliche Aromen, oder Kombinationen davon sein. Von den geschmacksgebenden Stoffen zu unterscheiden sind Zusätze wie Säureregulatoren, Stabilisatoren, Emulgatoren und Bindemittel, welche vielmehr zur Beeinflussung der Konsistenz oder Stabilität des hergestellten Milchgetränks verwendet werden.

Die saure Komponente kann beispielsweise Fruchtsaft, Fruchtsaftkonzentrat, Fruchtmark, Fruchtpüree sowie Fruchtzubereitungen daraus, Gemüsesaft, Gemüsesaftkonzentrat, Getreide und weitere fermentierte natürliche Zutaten sowie Zubereitungen daraus, Kaffee, und/oder Tee, Teeaufguss und (flüssiger) Tee-Extrakt zum Beispiel aus Pulver oder Paste sowie Zubereitungen daraus sein.

Die hier genannten Angaben zu Behandlungstemperaturen, Zeiten und Drücken sind insbesondere geeignet für die Verwendung von Kaffee oder Kaffee-Extrakt als saure Komponente. Soll eine andere saure Komponente verwendet werden, können die Einstellung im Rahmen der vorgegebenen Parameter entsprechend angepasst werden.

In einer erfindungsgemässen Ausführungsform des Verfahrens, welche mit jeder genannten und noch zu nennenden Ausführungsform kombiniert werden kann, sofern nicht im Widerspruch dazu, liegt die Denaturierungszeit t_{DENAT} in einem Bereich von 30 Sek bis 1 h.

Die Denaturierungszeit t_{DENAT} wird an die gewählte Denaturierungstemperatur T_{DENAT} angepasst. In Bezug auf die Denaturierungstemperatur T_{DENAT} und die Denaturierungszeit t_{DNAT} gilt: je höher die Denaturierungstemperatur T_{DENAT}, desto kürzer die Denaturierungszeit t_{DENAT}. Durch die Abstimmung von Denaturierungstemperatur T_{DENAT} und die Denaturierungszeit t_{DNAT} soll Einfluss auf den Denaturierungsgrad der nativen Molkenproteine genommen und ein relativ hoher Denaturierungsgrad dieser Proteine erzielt werden. Es wird gegenwärtig angenommen, dass durch den Denaturierungsschritt eine relativ hohe Denaturierung von nativen Molkeproteinen erzielt wird, die in einem Bereich von 60 bis 99 % liegt, bzw. eine Denaturierung, die in einem Bereich von 60 % bis zu 100% liegt, wenn sich diese konkret auf das Molkeprotein β-Lactoglobulin B bezieht. Bei nachfolgenden Schritten des Herstellungsverfahrens wie dem Mischen mit einer sauren Komponente oder der Haltbarmachung, oder auch beim Lagern würden dann weniger native Milchproteine vorliegen, die ausflocken können. Der minimal benötigte oder der optimale Denaturierungsgrad, der für ein stabiles Milch-Mischgetränk anvisiert werden sollte, kann dabei neben den Rohstoffeigenschaften auch durch prozesstechnische Aspekte beeinflusst werden. Wird ein bestimmter, zu erzielender Denaturierungsgrad in dem oben genannten Bereich anvisiert, kann die Festlegung der zu verwendenden Denaturierungszeit t_{DNAT} damit zum Beispiel auch unter Berücksichtigung zusätzlicher Aspekte wie verfahrenstechnische Gegebenheiten oder auch Rohstoffeigenschaften (wie Säuregehalt der sauren Komponente, Säureanteil in der Rezeptur, ...) erfolgen.

Eine zu lange Denaturierung, durch welche eine sogenannte Maillard-Reaktion ausgelöst werden könnte, ist nicht wünschenswert, da diese zu einer unerwünschten Färbung und/oder Geschmacksveränderung der Milch beziehungsweise des späteren Milch-Gemischs führen könnte. Eine kürzere Denaturierungszeit kann insbesondere aus verfahrenstechnischen Aspekten nicht wünschenswert sein.

In einer erfindungsgemässen Ausführungsform des Verfahrens, welche mit jeder genannten und noch zu nennenden Ausführungsform kombiniert werden kann, sofern nicht im Widerspruch dazu, wird mittels des Denaturierungsschritts der Milch ein Denaturierungsgrad des nativen Molkeproteins β-Lactoglobulin B erzeugt, welcher in einem Bereich von 60 % bis 100 % liegt.

Entsprechend kann vorgesehen sein, wie erwähnt über das Anpassen von zum Beispiel der Denaturierungszeit t_{DENAT} und/oder der Denaturierungstemperatur T_{DNAT}, und gegebenenfalls unter Berücksichtigung weiterer Prozessbedingungen wie zum Beispiel Bedingungen beim Mischen der Milch und der sauren Komponente und/oder beim Homogenisieren, und/oder Rohstoffeigenschaften der Milch und/oder der sauren Komponente einen Denaturierungsgrad des nativen Molkeproteins β-Lactoglobulin B in diesem Bereich zu erzielen.

Das Molkeproteins β-Lactoglobulin B hat sich in der Fachwelt als ein geeigneter Standard etabliert, um den Denaturierungsgrad einer Milchkomponente zu bestimmen bzw. zu beurteilen, da es eine bezüglich Denaturierung sehr empfindliche Fraktion der gesamten Molkeproteine darstellt. Der Denaturierungsgrad von β-Lactoglobulin B wird dabei als ein prozentualer Anteil von denaturiert vorliegendem β-Lactoglobulin B bezogen auf die Gesamtfraktion von β-Lactoglobulin B beschrieben.

Es wird in diesem Zusammenhang von einer Denaturierung von 100 % der β-Lactoglobulin B-Fraktion gesprochen, wenn messtechnisch Werte über 99% erreicht werden.

In einer erfindungsgemässen Ausführungsform des Verfahrens, welche mit jeder genannten und noch zu nennenden Ausführungsform kombiniert werden kann, sofern nicht im Widerspruch dazu, wird mittels des Denaturierungsschritts der Milch ein Denaturierungsgrad des nativen Molkeproteins β-Lactoglobulin B erzeugt, welcher in einem Bereich von 80 % bis 100 % liegt, insbesondere in einem Bereich von 80 % bis 99% oder in einem Bereich von 80 % bis 95 %.

In einer erfindungsgemässen Ausführungsform des Verfahrens, welche mit jeder genannten und noch zu nennenden Ausführungsform kombiniert werden kann, sofern nicht im Widerspruch dazu, wird mittels des Denaturierungsschritts der Milch ein Denaturierungsgrad des nativen Molkeproteins β-Lactoglobulin B erzeugt, welcher in einem Bereich von 90 % bis 100 % liegt.

Es kann sein, dass eine Denaturierungszeit t_{DENAT}, die in einem Bereich von 240 Sek bis 420 Sek liegt, noch spezieller in einem Bereich von 240 Sek bis 320 Sek besonders geeignet ist. Eine Denaturierungszeit t_{DENAT} von 420 Sek ist beispielsweise für eine Denaturierungstemperatur T_{DENAT} von 86 °C geeignet, während eine Denaturierungszeit t_{DENAT} von 320 Sek beispielsweise für eine Denaturierungstemperatur T_{DENAT} von 88 °C, oder eine Denaturierungszeit t_{DENAT} von 240 Sek für eine Denaturierungstemperatur T_{DENAT} von 95 °C geeignet ist. Wird beispielsweise eine Denaturierungstemperatur T_{DENAT} von 72 °C verwendet, liegt die geeignete Denaturierungszeit t_{DENAT} bei 1 h (Stunde).

Wird beispielsweise eine Denaturierungstemperatur T_{DENAT} von 155 °C verwendet, liegt die geeignete Denaturierungszeit t_{DENAT} bei circa 30 Sek.

In einer erfindungsgemässen Ausführungsform des Verfahrens, welche mit jeder genannten und noch zu nennenden Ausführungsform kombiniert werden kann, sofern nicht im Widerspruch dazu, liegt die Denaturierungszeit t_{DENAT}, die in einem Bereich von 60 Sek bis 420 Sek liegt, vorzugsweise in einem Bereich von 100 Sek bis 320 Sek.

Es kann im speziellen eine Denaturierungszeit t_{DENAT} geeignet sein, welche in einem Bereich von 100 Sek bis 200 Sek liegt.

Beispielhaft sei eine Denaturierungszeit t_{DENAT} von 120 Sek erwähnt. Diese Denaturierungszeit t_{DENAT} kann dann geeignet sein, wenn die weiteren Bedingungen des Verfahrens (verfahrenstechnische oder Rohstofftechnische wie oben erwähnt) derart angepasst werden können, um einen Denaturierungsgrad in einem der oben beschriebenen Bereiche zu erzielen.

In einer erfindungsgemässen Ausführungsform des Verfahrens, welche mit jeder genannten und noch zu nennenden Ausführungsform kombiniert werden kann, sofern nicht im Widerspruch dazu, liegt die Denaturierungszeit t_{DENAT} in einem Bereich von 240 Sek bis 320 Sek, bei einer Denaturierungstemperatur T_{DENAT} in einem Bereich von 86 °C bis 95 °C.

In einer erfindungsgemässen Ausführungsform des Verfahrens, welche mit jeder genannten und noch zu nennenden Ausführungsform kombiniert werden kann, sofern nicht im Widerspruch dazu, wird der Denaturierungsschritt der Milch bei einer Denaturierungstemperatur T_{DENAT} in einem Bereich von 86 °C bis 95 °C durchgeführt.

In einer erfindungsgemässen Ausführungsform des Verfahrens, welche mit jeder genannten und noch zu nennenden Ausführungsform kombiniert werden kann, sofern nicht im Widerspruch dazu, liegt die Denaturierungstemperatur T_{DENAT} bei 90 °C und die Denaturierungszeit t_{DENAT} bei 300 Sek.

In einer erfindungsgemässen Ausführungsform des Verfahrens, welche mit jeder genannten und noch zu nennenden Ausführungsform kombiniert werden kann, sofern nicht im Widerspruch dazu, liegt die liegt die Denaturierungstemperatur T_{DENAT} bei 90 °C und die Denaturierungszeit t_{DENAT} bei 120 Sek.

Es hat sich gezeigt, dass auch bei einer vergleichsweise kürzeren Denaturierungszeit t_{DENAT} ein genügend hoher Denaturierungsgrad der erzielt wird, der es ermöglicht, ein Gemisch herzustellen, welches genügend stabil gegenüber Ausflockungen zum Beispiel beim Mischen oder auch beim Lagern ist.

In einer erfindungsgemässen Ausführungsform des Verfahrens, welche mit jeder genannten und noch zu nennenden Ausführungsform kombiniert werden kann, sofern nicht im Widerspruch dazu, erfolgt das Homogenisieren des hitzebehandelten Gemischs bei einer Temperatur T_{HOM}, die in einem Bereich von 65 °C bis 80 °C liegt.

Es kann vorgesehen sein, dass in einer Ausführungsform des Verfahrens, welche mit jeder genannten und noch zu nennenden Ausführungsform kombiniert werden kann, die Homogenisierung des Gemischs bei einem Druck p_{HOM} durchgeführt wird, der in einem Bereich 75 bar bis 250 bar, vorzugsweise in einem Bereich von 100 bar bis 170 bar, ganz besonders bevorzugt in einem Bereich von 100 bar bis 150 bar liegt.

In einer erfindungsgemässen Ausführungsform des Verfahrens, welche mit jeder genannten und noch zu nennenden Ausführungsform kombiniert werden kann, sofern nicht im Widerspruch dazu, ist das Hitzebehandeln des Gemischs eine Pasteurisierung. Hierzu liegt die Temperatur T_{HALT} in einem Bereich von 63 °C bis 133 °C und die Hitzebehandlungszeit t_{HALT} in einem Bereich von 2 Sek bis 200 Sek. Mittels einer Pasteurisierung wird das Gemisch auf eine schonende Art zum Abtöten von vegetativen pathogenen Keimen behandelt. Das entsprechende, pasteurisierte Endprodukt ist gekühlt für circa 30 bis 60 Tage stabil lagerbar. Bei der Pasteurisierung werden die Temperatur T_{HALT} und die Hitzebehandlungszeit t_{HALT} aufeinander abgestimmt. Beispielsweise kann eine Batch-Pasteurisierung bei 63 °C für circa 2000 Sek durchgeführt werden. Bei einer Hochpasteurisation, also eine Pasteurisierung in dem höheren Temperaturbereich, kann beispielsweise eine Temperatur von 125°C für circa 2 bis 8 Sek angelegt werden.

In einer erfindungsgemässen Ausführungsform des Verfahrens, welche mit jeder genannten und noch zu nennenden Ausführungsform kombiniert werden kann, sofern nicht im Widerspruch dazu, ist das Hitzebehandeln des Gemischs eine Ultrahocherhitzung. Hierzu liegt die Temperatur T_{HALT} in einem Bereich von 130 °C bis 155 °C und die Hitzebehandlungszeit t_{HALT} in einem Bereich von 2 Sek bis 8 Sek. Mittels einer Ultrahocherhitzung erfolgt nicht nur das Abtöten von vegetativen Keimen, sondern auch von eventuell vorhandenen Sporen. Das entsprechende, ultrahocherhitzte Endprodukt ist ungekühlt für 90 Tage oder mehr lagerbar. Auch bei einer Ultrahocherhitzung wird typischerweise die Temperatur T_{HALT} und die Behandlungszeit t_{HALT} aufeinander abgestimmt. Beispielsweise kann eine Ultrahocherhitzung bei 130 °C für 10 Sek bis 30 Sek durchgeführt werden. Soll eine höhere Temperatur gewählt werden, ist beispielsweise eine Temperatur von 155 °C für 1 Sek bis 10 Sek möglich.

Alternativ kann die Hitzebehandlung auch eine Sterilisation sein, sofern die Eigenschaften des Gemischs nicht beeinträchtigt werden.

In einer erfindungsgemässen Ausführungsform des Verfahrens, welche mit jeder genannten und noch zu nennenden Ausführungsform kombiniert werden kann, sofern nicht im Widerspruch dazu, wird die Milch unmittelbar vor dem Denaturierungsschritt vorhomogenisiert. Der Vorhomogenisierungsdruck p_{PRE} liegt dabei in einem Bereich von 100 bar bis 300 bar. Insbesondere kann der Vorhomogenisierungsdruck p_{PRE} in einem Bereich von 150 bis 250 bar liegen.

Durch eine solche Vorhomogenisierung der Milch kann zusätzlich eine verbesserte Stabilität und verminderte Ausflockung erzielt werden. Es wird angenommen, dass durch zusätzliche Reduzierung des Durchmessers der Fettkügelchen in der Milch die Proteinstrukturen in der Milch zusätzlich verändert werden, was wiederum zu der Verminderung der Ausflockung beiträgt.

In einer erfindungsgemässen Ausführungsform des Verfahrens, welche mit jeder genannten und noch zu nennenden Ausführungsform kombiniert werden kann, sofern nicht im Widerspruch dazu, erfolgt das Vorhomogenisieren bei einer Temperatur T_{PRE}, die in einem Bereich von 65 °C bis 80 °C liegt. Die Temperatur T_{PRE} der Vorhomogenisierung kann beispielsweise an die Eigenschaften der Milch angepasst und/oder nach anlagentechnischen Aspekten ausgewählt werden. Beispielsweise wird eine höhere Temperatur T_{PRE} gewählt, wenn eine Milch mit höherem Fettgehalt verwendet wird.

In einer erfindungsgemässen Ausführungsform des Verfahrens, welche mit jeder genannten und noch zu nennenden Ausführungsform kombiniert werden kann, sofern nicht im Widerspruch dazu, umfasst die Milch und/oder die saure Komponente geschmacksgebende Stoffe. Inwieweit solche geschmacksgebenden Stoffe der Milch oder der sauren Komponente zugeführt werden, oder beiden, kann im Hinblick auf prozesstechnische Aspekte entschieden werden. Um dem Effekt bezüglich der Erhöhung der Haltbarkeit nicht entgegenzuwirken, kann vorgesehen sein, solche optionalen geschmacksgebenden Stoffe vor der Hitzebehandlung des Gemischs und/oder den Einzelkomponenten zuzufügen.

In einer erfindungsgemässen Ausführungsform des Verfahrens, welche mit jeder genannten und noch zu nennenden Ausführungsform kombiniert werden kann, sofern nicht im Widerspruch dazu, wird die Milch und die saure Komponente in einem Mischungsverhältnis gemischt, welches nach der Homogenisierung und dem Abkühlen ein Gemisch ergibt, welches einen pH Wert aufweist, der in einem Bereich von 5,8 bis 6,8 liegt.

In einer erfindungsgemässen Ausführungsform des Verfahrens, welche mit jeder genannten und noch zu nennenden Ausführungsform kombiniert werden kann, sofern nicht im Widerspruch dazu, wird die Milch und die saure Komponente in einem Mischungsverhältnis gemischt, welches nach der Homogenisierung und dem Abkühlen ein Gemisch ergibt, welches einen pH Wert aufweist, der in einem Bereich von 6,2 bis 6,8 liegt, und/oder welches einen Säuregrad aufweist, der in einem Bereich von 4,5 °SH bis 12,5 °SH liegt.

Ein Gemisch mit einem End-pH-Wert in diesem Bereich hat sich als besonders geeignet herausgestellt, allein durch die Wahl der hier diskutierten Verfahrensparameter als ein hinsichtlich Ausflockungen stabiles Endprodukt hergestellt zu werden. Unter einem Endprodukt wird hier das fertige Produkt verstanden, wie es abgefüllt und schliesslich im Geschäft verkauft wird. Ist der End-pH-Wert zu tief, erhöht sich wieder die Gefahr der unerwünschten Ausflockungen bei der Herstellung und/oder bei der Lagerung.

Die Angabe °SH bezieht sich auf den Säuregrad nach Soxhlet-Henkel.

In einer erfindungsgemässen Ausführungsform des Verfahrens, welche mit jeder genannten und noch zu nennenden Ausführungsform kombiniert werden kann, sofern nicht im Widerspruch dazu, wird die Milch und die saure Komponente in einem Mischungsverhältnis gemischt, welches nach der Homogenisierung und dem Abkühlen ein Gemisch ergibt, welches einen pH Wert aufweist, der in einem Bereich von 6,3 bis 6,6 liegt.

Je nach eingesetzten Bestandteilen des Gemischs (insbesondere saure Komponente und Milch) kann sich zum Beispiel die kritische Untergrenze des pH-Werts des Gemischs leicht verändern. Faktoren wie beispielsweise die Natur/Art der eingesetzten sauren Komponente, dessen Säuregehalt und/oder gewünschtem Volumenanteil im Endprodukt, und/oder dem Proteingehalt der eingesetzten Milch können einen Einfluss auf den pH-Wert und auf die Stabilität des Gemisches haben. Früchte beispielsweise können mehr Säure als Kaffee enthalten, so dass Gemische auf Fruchtbasis tendenziell saurer sein können als Gemische auf Kaffee-Basis. Zusätzlich kann der Proteinanteil der Milch eine puffernde und damit pH-stabilisierende Wirkung aufweisen. So konnte für ein Gemische aus Magermilch, Rahm, Zucker und Fruchtpüree ein pH-Wert von circa 6,2 gemessen werden, wobei das Gemisch die Anforderungen bezüglich Stabilität erfüllt hat. Ein niedrigerer pH-Wert des Gemisches kann entsprechend ebenfalls möglich sein, wobei sich gezeigt hat, dass Gemische mit einem pH-Wert unterhalt von 5,8 nicht die gewünschte Stabilität gegenüber Ausflockungen aufweisen. Die Rezeptur der Tabelle 1 weist beispielsweise einen pH-Wert zwischen 6,5 und 6,6, gemessen am Endprodukt, auf.

Andererseits kann sich der pH-Wert zum Beispiel durch Zugabe eines pH-Stabilisators erhöhen, zum Beispiel bei einem Gemisch aus Milch und Kaffee auf 6,9 bis hin zu 7,0. Als eine geeignete Obergrenze des pH-Wertes des Gemisches aus Milch und saurer Komponente bzw. des Endprodukts wird ein pH-Wert von 7,0 betrachtet, besonders geeignet ein pH-Wert von 6,9, insbesondere ein pH-Wert von 6,8 oder sogar 6,6.

Für ein erfindungsgemässes Gemisch aus Milch und der sauren Komponente kann sich damit je nach Eigenschaften des Gemisches ein End-pH-Wert ergeben, welcher aus der Kombination einer der oben besprochenen Untergrenzen mit einer der oben besprochenen Obergrenzen abgeleitet werden kann.

Wird von einem pH-Wert des Gemisches nach dem Homogenisieren und dem Abkühlen gesprochen, wird sich inhärent auf den pH-Wert auf das End-Produkt (also auf den End-pH-Wert) bezogen.

Es kann besonders vorteilhaft sein, dass das Gemisch nach dem Homogenisieren und dem Abkühlen einen pH-Wert aufweist, der in einem Bereich von 6,3 bis 6,6 liegt, und/oder einen Säuregrad aufweist, der in einem Bereich von 5,5 °SH bis 11,9 °SH liegt, beispielsweise bei einem Milch-Kaffee-basierten Gemisch.

In einer erfindungsgemässen Ausführungsform des Verfahrens, welche mit jeder genannten und noch zu nennenden Ausführungsform kombiniert werden kann, sofern nicht im Widerspruch dazu, wird das Gemisch nach dem Abkühlen bei einer Lagertemperatur zunächst gelagert und dann abgefüllt, oder das Gemisch wird nach dem Abkühlen direkt abgefüllt.

In einer erfindungsgemässen Ausführungsform des Verfahrens, welche mit jeder genannten und noch zu nennenden Ausführungsform kombiniert werden kann, sofern nicht im Widerspruch dazu, liegt die Lagertemperatur in einem Bereich von 4°C bis 25°C. Das Abfüllen des Gemisches kann bei der Lagertemperatur erfolgen. Typischerweise erfolgt das Abfüllen in das entsprechend vorgesehene Behältnis, in welchem das fertige Gemisch verkauft werden soll. Wie bereits erwähnt kann die Lagertemperatur und/oder die Abfülltemperatur an die Art der angewendeten Hitzebehandlung (Pasteurisieren, Ultrahocherhitzen, Sterilisieren) angepasst werden.

In einer erfindungsgemässen Ausführungsform des Verfahrens, welche mit jeder genannten und noch zu nennenden Ausführungsform kombiniert werden kann, sofern nicht im Widerspruch dazu, ist die saure Komponente ausgewählt aus einer Gruppe, welche umfasst:
Fruchtsaft, Fruchtsaftkonzentrat, Fruchtmark, Fruchtpüree sowie Fruchtzubereitungen daraus, Gemüsesaft, Gemüsesaftkonzentrat, Getreide und weitere fermentierte natürliche Zutaten sowie Zubereitungen daraus, Kaffee, und/oder Tee, Teeaufguss und flüssiger Tee-Extrakt, zum Beispiel aus Pulver oder Paste, sowie Zubereitungen daraus.

Die saure Komponente weist einen sauren pH-Wert auf, also einen pH-Wert unter 7,0. Wesentlich für die Eigenschaften des Gemisches aus Milch und der sauren Komponente ist tatsächlich weniger der pH-Wert der sauren Komponente selbst, sondern im Zusammenhang mit deren Anteil in dem Milchgemisch und der sich entsprechend ergebene pH-Wert des Gemischs mit dem angewendeten Mischverhältnis.

In einer erfindungsgemässen Ausführungsform des Verfahrens, welche mit jeder genannten und noch zu nennenden Ausführungsform kombiniert werden kann, sofern nicht im Widerspruch dazu, ist die saure Komponente Kaffee.

Unter Kaffee wird hier eine flüssige, Kaffee-enthaltene Komponente verstanden. Kaffee kann beispielsweise gebrühter Bohnenkaffe, oder das Produkt aus einem sogenannten cold brew Verfahren sein. Die flüssige, Kaffee-enthaltende Komponente kann ebenfalls aufgelöster Pulverkaffee, oder aus Paste zurückverdünntes Kaffee-Konzentrat, oder Zubereitungen daraus sein.

In einer erfindungsgemässen Ausführungsform des Verfahrens, welche mit jeder genannten und noch zu nennenden Ausführungsform kombiniert werden kann, sofern nicht im Widerspruch dazu, wird der Kaffee aus Kaffeebohnen hergestellt. Hierzu werden die Kaffeebohnen zunächst geröstet. Je nach verwendetem Gerät und/oder Kaffeebohne kann die Röstung bei einer Temperatur zwischen 150°C und 240 °C erfolgen, beispielsweise während eines Zeitraums von 10 bis 20 Min. Ein geeigneter Röster ist beispielsweise ein Probat-Röster.

Die gerösteten Kaffeebohnen werden anschliessend gemahlen, und danach einem Brühprozess unterzogen. Der Brühprozess kann beispielsweise in einem höheren Temperaturbereich durchgeführt werden, der beispielsweise in einem Bereich von 80 °C bis 100 °C, insbesondere in einem Bereich von 86 °C bis 96 °C liegt. Der Brühprozess kann aber auch in einem niedrigeren Temperaturbereich liegen, wenn beispielsweise der Kaffee nach dem cold brew Verfahren hergestellt werden soll. In diesem Falle kann der Brühprozess in einem Temperaturbereich von 2 °C bis 25 °C durchgeführt werden. Bei diesem Verfahren erfolgt das Brühen typischerweise über einen längeren Zeitraum, beispielsweise über mehrere Stunden oder Tage.

Geeignete Kaffeebohnen sind beispielsweise Arabica-Sorten aus Zentralamerika, Südamerika, Indien oder anderen Herkunftsorten, oder Mischungen hiervon. Ebenfalls geeignete Kaffeebohnen können Robusta-Sorten verschiedenen Ursprungs sein.

Der durch das Brühen entstandene, flüssige Kaffee kann nun beispielsweise für bis zu 4 Tage zwischengelagert werden. Eine geeignete Lagertemperatur liegt in einem Bereich von 4 °C bis 8 °C. Bei einer Zwischenlagerung kann der Kaffee von der Lagertemperatur ausgehend auf eine Mischtemperatur T_{MIX} erhitzt und dann dem Milchstrom nach der Denaturierung zugeführt werden. Eine solche Vorlagerung hat den Vorteil, dass der Kaffee relativ unabhängig von der Milch hergestellt werden kann und unmittelbar für die Herstellung des kalten Kaffee-Milch-Mischgetränks aus dem Lager in das Verfahren eingespeist werden kann.

Es ist ebenso möglich, dass der frisch hergestellte Kaffee direkt aus dem Brühprozess in den Milchstrom zum Mischen überführt wird. In diesem Fall kann es sein, dass der Kaffee für das Einstellen auf die Mischtemperatur gekühlt werden muss, oder erhitzt werden muss, oder der Kaffee wird direkt bei der gewünschten Mischtemperatur T_{MIX} dem Kaffee-Strom entnommen und benötigt dann keine zusätzliche Temperaturbehandlung.

In einer erfindungsgemässen Ausführungsform des Verfahrens, welche mit jeder genannten und noch zu nennenden Ausführungsform kombiniert werden kann, sofern nicht im Widerspruch dazu, wird der Kaffee vor dem Mischen mit der Milch getrennt gelagert und zum Mischen auf eine Mischtemperatur T_{MIX} vorgewärmt.

In einer erfindungsgemässen Ausführungsform des Verfahrens, welche mit jeder genannten und noch zu nennenden Ausführungsform kombiniert werden kann, sofern nicht im Widerspruch dazu, entspricht die Mischtemperatur T_{MIX} im Wesentlichen der Denaturierungstemperatur T_{DENAT} der Milch +/- 15 °C.

Wie bereits zuvor erwähnt, hat aufgrund der separaten Denaturierungsbehandlung der Milch die Temperatur, bei welcher gemischt wird, keinen bzw. keinen signifikanten und damit vernachlässigbaren Einfluss auf die Stabilität des erzeugten Milch-Mischgetränks hat. Die Wahl der Temperaturen der Milch und des Kaffees kann daher auch unter prozess- und energietechnischen Aspekten abgestimmt werden.

Für die Herstellung eines kalten Kaffee-Milch-Gemisches kann der Fettgehalt der verwendeten Milch beispielsweise in einem Bereich von 0,05 % bis 10 % liegen. Die entsprechend verwendete Milch kann abgestimmt sein auf Endprodukt. Soll beispielsweise Cappuccino hergestellt werden, eignet sich Milch mit Fettgehalt von ungefähr 1,5 % besonders gut, während sich für die Herstellung eines Macchiatos Milch mit einem Fettgehalt von ungefähr 5,0 % besonders gut eignet.

Beschrieben werden ebenfalls beispielhaft verschiedene Mischgetränke aus Milch und einer sauren Komponente, welche nach dem erfindungsgemässen Verfahren hergestellt sind. Ein solches Mischgetränk ist für mindestens 50 Tage ohne Ausflockung stabil lagerbar.

Diese stabile Lagerbarkeit bezieht sich auf eine Produkt-entsprechende Lagerung. So sind pasteurisierte Mischgetränke beispielsweise für mindestens 50 Tage bei 4 bis 10 °C stabil lagerbar, während ultrahocherhitzte Mischgetränke selbst bei Raumtemperatur für 50 Tage bis zu 3 oder mehr Monate lagerbar sind. Es wird gegenwärtig angenommen, dass durch die zuvor durchgeführte Denaturierung der Milch der Anteil der nach der Herstellung ausflockbaren Anteile an Milchproteinen deutlich verringert wurde. Unter einer stabilen Lagerbarkeit wird in diesem Zusammenhang damit eine Lagerung über die oben erwähnten Zeiträume ohne sichtbare Ausflockung verstanden. Das Vorliegen von Ausflockungen wird dabei visuell am Endprodukt beurteilt.

Ein beispielhaftes Milchmischgetränk kann bestehen aus:
- Milch, und
- der sauren Komponente, und
- geschmackgebenden Stoffen, und/oder
- einem oder mehreren Zusätzen, welche ausgewählt sind aus einer Gruppe, die umfasst: Stabilisatoren, Emulgatoren und Bindemittel.

Hier konnte auf den Einsatz eines Säureregulators verzichtet werden.

Ein weiteres beispielhaftes Milchmischgetränk kann bestehen aus
- Milch, und
- der sauren Komponente, und
- geschmackgebenden Stoffen.

Bei diesem Milchmischgetränk sind damit keine Zusatzstoffe zur Stabilisierung eingesetzt.

Ein beispielhaftes_Milchmischgetränk kann aus Milch und der sauren Komponente bestehen. Hier wurde auf jegliche Zusätze, auch auf geschmacksgebende Stoffe verzichtet. Es kann sich hier beispielsweise um ein Produkt aus Milch und Kaffee (Milchkaffee) oder um ein Milch-Fruchtsaftgemisch handeln.

In einem beispielhaften Milchmischgetränk kann die saure Komponente Kaffee sein.

In einem beispielhaften Milchmischgetränk kann die saure Komponente Fruchtpüree sein.

Die Milch eines beispielhaften Milchmischgetränks kann sein:
Vollmilch oder Magermilch oder teilentrahmte Milch oder im Fettgehalt standardisierte Milch oder Rahm oder eine oder mehrere Milchfraktionen oder eine Kombination davon. Die Milch beziehungsweise ihre Zusammensetzung kann insbesondere davon abhängen, welches Endprodukt genau hergestellt werden soll. Für einen kalten Cappuccino mit Kaffee als saurer Komponente kann beispielsweise eine Zusammensetzung gewählt werden, die einen Fettgehalt von circa 1,5% aufweist, während beispielsweise für einen Macchiato, ebenfalls mit Kaffee als saurer Komponente, eine Zusammensetzung gewählt werden kann, die einen Fettgehalt von 5 % aufweist. Neben oder alternativ zu dem Fettgehalt der Milch kann beispielsweise auch die Viskosität oder die Konsistenz im Allgemeinen über die Zusammensetzung der Milch eingestellt werden.

In einem beispielhaften Milchmischgetränk kann die Milch sein: Vollmilch oder Magermilch oder teilentrahmte Milch oder im Fettgehalt standardisierte Milch oder Rahm oder eine Kombination davon. Zudem umfasst die Milch zumindest eine Milchfraktion, welche vorzugsweise Milchprotein umfasst.

Insbesondere durch Zugabe von Milchprotein kann die Konsistenz des späteren Milchgemisches auf natürliche Art und Weise beeinflusst werden.

Es wird gegenwärtig angenommen, dass die separate Vorbehandlung der Milch ohne Kaffee-Extrakt bzw. saurer Komponente zu einer Veränderung der Proteinstrukturen in der Milch führt, und so eine Stabilisierung bei den weiteren Hitzebehandlungen zur Erhöhung der Haltbarkeit und nachfolgender Homogenisierung, die durch die Zugabe der sauren Komponente, wie zum Beispiel der Kaffee-Komponente, in einem leicht sauren Bereich erfolgen, erzielt wird. So kann allein aufgrund des Verfahrensablaufs, sofern gewünscht, auf die Zugabe vor allem von Säureregulatoren, Stabilisatoren, Emulgatoren, und/oder Bindemittel verzichtet werden, ohne die Stabilität des Milch-Gemisches in Bezug auf mögliche Ausflockung zu beeinträchtigen.

Beschrieben wird ebenfalls eine Anlage 1, welche zum Durchführen eines Verfahrens mit den Verfahrensschritten und in der Reihenfolge, wie es zuvor beschrieben ist, geeignet ist. Je nach Verfahren kann die Anlage 1 zusätzliche

Elemente umfassen. Die Anlage 1 umfasst zumindest folgende Vorrichtungen und Anlagenteile:
- eine Denaturierungs-Vorrichtung 2 zum Durchführen einer separaten Denaturierungsbehandlung der Milch. Mit dieser Denaturierungs-Vorrichtung 2 wird die Milch auf die Denaturierungstemperatur T_{DENAT} erhitzt und für die Denaturierungszeit t_{DENAT} bei der Denaturierungstemperatur T_{DENAT} gehalten. Eine solche Denaturierungs-Vorrichtung 2 kann beispielsweise ein Wärmetauscher, wie z.B. ein Platten- oder Röhrenwärmetauscher sein.
- eine Vorrichtung 9 zum Zusammenführen der denaturieren Milch und der sauren Komponente zu einem Gemisch. Da in diesem Fall Ströme zusammengeführt werden, erfolgt durch das Zusammenführen der Misch-Schritt.
- eine Vorrichtung 3 zum Durchführen einer Hitzebehandlung des Gemisches zur Erhöhung von dessen Haltbarkeit. Mit dieser Vorrichtung 3 wird das Gemisch, welches Milch aus der Denaturierungs-Behandlung und die saure Komponente umfasst, zur Erhöhung der Haltbarkeit behandelt. Eine solche Vorrichtung 3 ist ausgebildet, das Gemisch auf die notwendige Temperatur T_{HALT} für die korrelierende Zeit t_{HALT} zu erhitzen, und entsprechend beispielsweise eine Pasteurisierung oder eine Ultrahocherhitzung durchzuführen. Die Vorrichtung kann beispielsweise ein Röhren- oder Plattenwärmetauscher sein, oder, wenn die Hitzebehandlung über Infusion oder Uperisation erfolgt, ein Gerät nach dem Infusions- oder Uperisationsverfahren.
- eine erste Homogenisierungs-Vorrichtung 4 zum Homogenisieren des hitzebehandelten Gemisches. Die erste Homogenisierungs-Vorrichtung 4 ist ausgebildet, den gewünschten Homogenisierungsdruck p_{HOM} aufzubauen. Eine solche Homogenisierungs-Vorrichtung 4 kann beispielsweise ein zweistufiger Kolben- Homogenisator sein. Es kann möglich sein, dass die Homogenisierungs-Vorrichtung 4 funktionell mit einem Wärmetauscher verbunden ist, um das zu homogenisierende Gemisch auf eine gewünschte Homogenisierungstemperatur T_{HOM} zu bringen, wie es später beschrieben ist.
- eine Kühlvorrichtung 5 zum Abkühlen des hitzebehandelten und homogenisierten Gemisches auf eine Lagertemperatur. Die Lagertemperatur kann, wie oben bereits beschrieben, in einem Bereich von 4 °C bis 25 °C liegen. Die Kühlvorrichtung 5 kann beispielsweise ein Wärmetauscher wie ein Platten- oder Röhrenwärmetauscher sein.
- Leitungen 6 zum Aufnehmen der Milch und Führen eines Milchstroms,
- Leitungen 7 zum Aufnehmen der sauren Komponente und Führen eines Stroms mit der sauren Komponente,
- Leitungen 8 zum Aufnehmen des Gemischs, welches die Milch und die saure Komponente umfasst und zum Führen des Gemischstroms,
   und
- eine Steuerung 10 zum Steuer des Verfahrens gemäss einem der oben beschriebenen Ausführungsformen oder Kombinationen davon als ein kontinuierliches Verfahren.

Unter einem kontinuierlichen Verfahren wird in diesem Zusammenhang ein Verfahren verstanden, bei welchem die jeweiligen Einzelkomponenten und das Gemisch in einer kontinuierlichen Abfolge von Verfahrensschritten, also im Wesentlichen ohne Unterbrechung behandelt werden. Die jeweiligen Ströme der flüssigen Komponenten (sei es Milch, die saure Komponente oder das Gemisch) werden kontinuierlich fliessend von einer Vorrichtung zur nächsten bewegt. Es erfolgt hier also keine sogenannte "batch-Produktion", bei welcher die Einzelkomponenten oder das Gemisch chargenweise verarbeitet und am Ende als ein Gesamtprodukt zusammengeführt werden. Die Milch, die saure Komponente und das Gemisch werden entsprechend in der Anlage 1 in kontinuierlich fliessenden Strömen von einer Vorrichtung der Anlage 1 zur nächsten bewegt.

Die Einzelkomponenten und das Gemisch werden daher in entsprechenden Leitungen 6,7,8 bewegt. Die Anlage 1 kann für einen kontrollierten Transport der Flüssigkeiten durch die Leitungen 6,7,8 und die verschiedenen Vorrichtungen eine oder mehrere wirkverbundene Druckpumpen umfassen und/oder Ventile, mit welchen eine jeweilige Durchlassmenge kontrolliert wird. Solche Pumpe(n) und/oder Ventile können beispielsweise mit einer oder mehreren Leitungen 6,7,8 für die Kontrolle der einzelnen Volumenströme wirkverbunden sein.

Die Steuerung 10 ist ausgebildet, das Verfahrens in einer oben beschriebenen Ausführungsform oder einer Kombination von Ausführungsformen als ein kontinuierliches Verfahren auf der Anlage 1 auszuführen. Beispielsweise kann die Steuerung die verschiedenen Vorrichtungen und/oder eine oder mehrere Leitungen 6,7,8 derart steuern, dass sie an die zu bewegenden Volumina der Flüssigkeitsströme angepasst sind. Dies können beispielsweise Anpassungen in den Kapazitäten der Vorrichtungen und/oder Anpassungen zur Regulation der jeweiligen Flüssigkeitsvolumen und deren Strömungseigenschaften sein. Zum Beispiel kann mittels der Steuerung 10 ein Verfahren gesteuert werden, bei welchem der Flüssigkeitsstrom der Milch 75 bis 95 % des Gesamt-Flüssigkeitsvolumens ausmacht, und der Flüssigkeitsstrom der sauren Komponente 5 bis 25 % des Gesamt-Flüssigkeitsvolumens. Die Anpassungen können individuell für das gewünschte Endprodukt erfolgen.

Die Steuerung 10 ist vorzugsweise zudem ausgebildet, die entsprechenden Verfahrensparameter wie Behandlungszeiten der Milch, der sauren Komponente und/oder des Gemisches wie t_{DENAT}, t_{HALT}, und/oder Behandlungstemperaturen T_{DENAT}, T_{HALT}, T_{HOM}, T_{PRE}, T_{MIX}, und/oder Behandlungsdrücke wie p_{HOM} und p_{PRE} , die beispielsweise bei der Denaturierung und/oder bei Hitzebehandlung zur Erhöhung der Haltbarkeit und/oder für einen oder mehrere Homogenisierungsschritte verwendet werden, zu kontrollieren und/oder diese gegebenenfalls in Abhängigkeit von den Leitungsgegebenheiten wie beispielsweise Länge der Leitung und Durchmesser sowie an die gewünschte Durchflussgeschwindigkeit anzupassen.

Die Vorrichtung 9 zum Zusammenführen des Milchstroms und des Stroms mit der sauren Komponente ist beispielsweise ein einfaches T-Verbindungsstück. Das Zusammenführen kann mittels eines oder mehrerer Ventile in der Milchstrom-Leitung 6 und/oder der Leitung 7 für die saure Komponente, in diesem Fall der Kaffeestrom-Leitung, steuerungstechnisch kontrolliert werden. Die Vorrichtung 9 zum Zusammenführen des Milchstroms und des Stroms mit der sauren Komponente kann aber auch andere, von einem T-Stück abweichende Ausbildungen der Leitungsführung aufweisen, solange sie ein Zusammenführen der zwei zuvor separat ausgebildeten Leitungen zu einer gemeinsamen Gemischleitung ermöglicht. Ein Dosierungsventil kann zusätzlich die Zusammenführung steuern.

Die Anlage 1 kann zusätzliche Kühlvorrichtungen 5', 5", etc. umfassen, um in möglichen Zwischenschritten die Temperatur einer oder beider Einzelkomponenten oder des Gemisches bei Bedarf zu verringern. Beispielsweise kann es nötig sein, das Gemisch aus Milch und der sauren Komponente nach der Hitzebehandlung zur Erhöhung der Haltbarkeit mittels einer Kühlvorrichtung 5' auf eine gewünschte, tiefere Homogenisierungstemperatur T_{HOM} abzukühlen. Es ist ebenfalls möglich, z.B. eine der Einzelkomponenten für einen Zwischenlagerungsschritt beispielsweise auf eine Lagertemperatur abzukühlen. Wird beispielsweise Kaffee als saure Komponente verwendet, kann mittels einer Kühlvorrichtung 5" der aus Kaffeebohnen aufgebrühte Kaffee für eine Zwischenlagerung auf zum Beispiel 4 °C abgekühlt werden. Solche Kühlvorrichtungen 5, 5', 5" können beispielsweise jeweils ein Wärmetauscher wie ein Platten- oder Röhrenwärmetauscher sein.

Die Anlage kann zusätzlich eine oder mehrere Heizvorrichtungen 12 umfassen, um gegebenenfalls die entsprechenden Flüssigkeiten für einen gewünschten Verfahrensschritt vorzuheizen. Eine solche Heizeinrichtung kann beispielsweise ein Wärmetauscher sein.

Eine beispielhafte Anlage kann eine zweite Homogenisierungs-Vorrichtung 11 umfassen. Mittels dieser zweiten Homogenisierungsvorrichtung erfolgt die Vorhomogenisierung der Milch, wie oben beschrieben. Die zweite Homogenisierungs-Vorrichtung 11 kann beispielsweise ein zweistufiger Kolben-Homogenisator sein, der ausgebildet ist, um den gewünschten Vorhomogenisierungsdruck p_{PRE} an die Milch anzulegen. Die zweite Homogenisierungs-Vorrichtung 11 kann funktionell mit einer Heizvorrichtung 12 verbunden sein, um die Milch für die Vor-Homogenisierung auf eine gewünschte Vorhomogenisierungstemperatur T_{PRE} zu erhitzen.

Bei der Denaturierungs-Vorrichtung 2 kann es sich um einen Wärmetauscher, bevorzugt um einen Plattenwärmetauscher oder einen Röhrenwärmetauscher handeln. Die Denaturierungs-Vorrichtung 2 umfasst dabei, wenn sie als ein Wärmetauscher ausgebildet ist, eine Heisshaltestrecke, welche derart ausgelegt ist, dass die die Milch für die geforderte Zeit heisshalten kann. Dies kann beispielsweise über die Wahl der Länge, über die Wahl des Durchmessers, oder auch über die Wahl des Materials der entsprechenden Leitung erfolgen.

Bei der Vorrichtung 9 zum Zusammenführen des denaturierten Milchstroms und des Stroms mit der sauren Komponente zu einem Gemisch kann es sich um ein rohrbasiertes Verbindungsstück handeln, beispielsweise ein T-Verbindungsstück, welches bevorzugt ein Dosierventil umfasst. Alternativ kann das rohrbasierte Verbindungsstück eine von einer T-Form abweichende Form aufweisen, beispielsweise eine Y-Form, solange die Form das Mischen bzw. Zusammenführen des denaturierten Milchstroms mit dem Strom mit der sauren Komponente erlaubt, wie oben erwähnt.

Bei der Vorrichtung 3 zum Durchführen der Hitzebehandlung kann es sich um einen Wärmetauscher handeln, bevorzugt um einen Plattenwärmetauscher oder einen Röhrenwärmetauscher, oder um ein Gerät nach dem Infusions- oder UperisationsVerfahren. Handelt es sich bei der Vorrichtung 3 zum Durchführen der Hitzebehandlung um einen Wärmetauscher, umfasst sie dabei eine Heisshaltestrecke, welche derart ausgelegt ist, dass die die Milch für die geforderte Zeit heisshalten kann. Dies kann beispielsweise über die Wahl der Länge, über die Wahl des Durchmessers, oder auch über die Wahl des Materials der entsprechenden Leitung erfolgen.

Bei der Homogenisierungs-Vorrichtung 4 kann es sich um einen Kolbenhomogenisator handeln.

Bei der Kühlvorrichtung 5 kann es sich um einen Wärmetauscher handeln, bevorzugt um einen Plattenwärmetauscher oder einen Röhrenwärmetauscher.

In einer beispielhaften Anlage verbinden die Leitungen 6,7,8 die verschiedenen Vorrichtungen derart, dass die Vorrichtungen strömungstechnisch so in einer Reihenfolge verbunden sind, dass das Verfahren gemäss der zuvor beschriebenen, erfinderischen Reihenfolge kontinuierlich ausgeführt wird:
Beispielhaft ist zumindest eine Leitung 6 zum Aufnehmen der Milch und Führen eines Milchstroms strömungstechnisch mit der Denaturierungs-Vorrichtung 2 verbunden, um die Milch in die Denaturierungs-Vorrichtung 2 zu führen. Es kann zudem eine oder mehrere weitere Leitungen 6 zum Aufnehmen und Führen der Milch vorgesehen sein, zum Beispiel zum Zuführen der Milch in eine Heizvorrichtung 12, bevor die Milch in die Denaturierungs-Vorrichtung 2 geführt wird. In diesem Fall kann die Milch ebenfalls durch eine Leitung 6 von der Heizvorrichtung 12 in die Denaturierungs-Vorrichtung geführt werden. Analog kann mittels einer oder mehrerer Leitungen 6 der Milchstrom von der Denaturierungs-Vorrichtung 2 zu der Vorrichtung 9 zum Zusammenführen der denaturierten Milch und der sauren Komponente zu einem Gemisch geführt werden;
oder aber zu und/oder von einer oder mehreren Vorrichtungen, welche der Denaturierungs-Vorrichtung 2 vorgeschaltet sind, zum Beispiel einer zweiten Homogenisierungs-Vorrichtung 11 für eine Vorhomogenisierung und/oder einer zusätzlichen Heizvorrichtung 12, wie zum Beispiel im Zusammenhang mit der Vorhomogenisierung beschrieben.

Ebenfalls beispielhaft ist zumindest eine Leitung 7 zum Aufnehmen der sauren Komponente und Führen eines Stroms mit der sauren Komponente strömungstechnisch mit der Vorrichtung 9 zum Zusammenführen der denaturierten Milch und der sauren Komponente zu einem Gemisch verbunden, um die saure Komponente in diese Vorrichtung 9 zu führen. Es kann vorgesehen sein, dass eine oder mehrere Leitungen 7 den Strom der sauren Komponente zu und/oder von Vorrichtungen, die der Mischvorrichtung vorgeschaltet sind, gewährleisten, zum Beispiel falls die saure Komponente vor dem Mischen mit der Milch in einer zusätzlichen Heizvorrichtung 12 erhitzt werden soll.

Ebenfalls beispielhaft verbindet zumindest eine Leitung 8 zum Aufnehmen des Gemischs und Führen des Gemisch-Stroms strömungstechnisch die Vorrichtung 9 zum Zusammenführen der Milch und der sauren Komponente mit der Vorrichtung 3 zur Hitzebehandlung des Gemisches. Zusätzliche Leitungen 8 können vorgesehen sein, um den Gemisch-Strom zum Beispiel von der Vorrichtung 3 zur Hitzebehandlung zum Beispiel zu und/oder von einer Kühlvorrichtung 5, 5' und/oder der ersten Homogenisierungs-Vorrichtung 4 und/oder dem Zwischenlager zu führen.

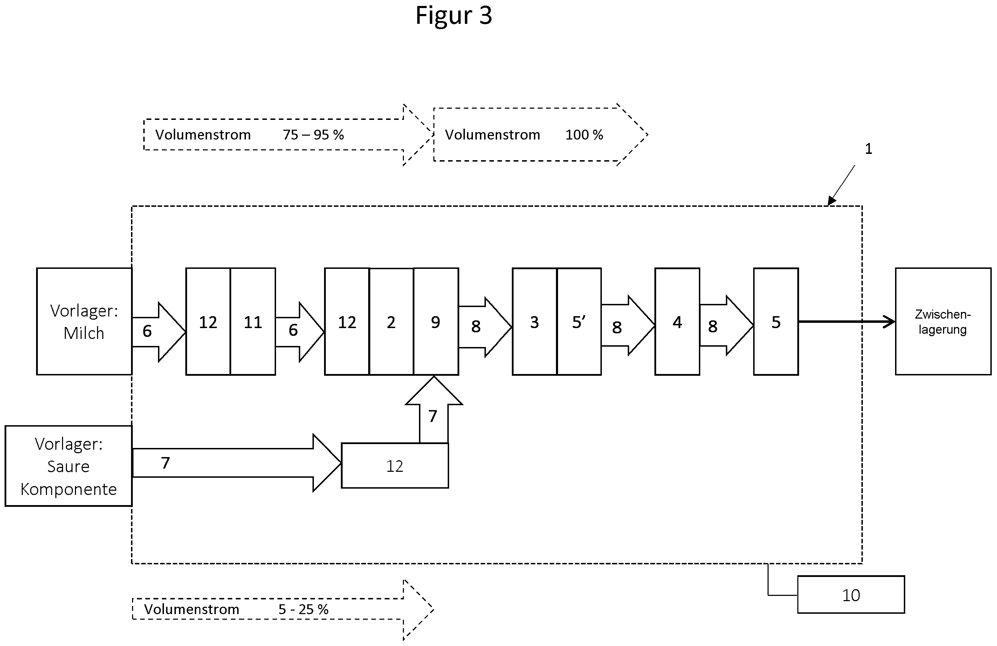

Beispielhaft sei auf die Anlage 1, wie sie in Figur 3 beschrieben ist, verwiesen.

Bei Bereichsangaben sind die erwähnten Eckwerte in den Bereich mit eingeschlossen.

### KURZE BESCHREIBUNG DER FIGUREN

Ausführungsbeispiele der vorliegenden Erfindung werden anhand von Figuren näher erläutert. Dabei zeigt
Figur 1 in einem schematischen Blockdiagramm die wesentlichen Schritte des Verfahrens;
Figur 2 in einem weiteren, schematisierten Blockdiagramm eine spezielle Ausführungsform des Verfahrens zur Herstellung eines kalten Kaffee-Milch-Gemischs mit zusätzlichen, optionalen Schritten, und
Figur 3 in einem schematisierten Blockdiagramm eine Anlage, in welcher die verschiedenen Anlagenelemente zur Durchführung eines kontinuierlichen Verfahrens angeordnet sind.

### DETAILLIERTE BESCHREIBUNG DER FIGUREN

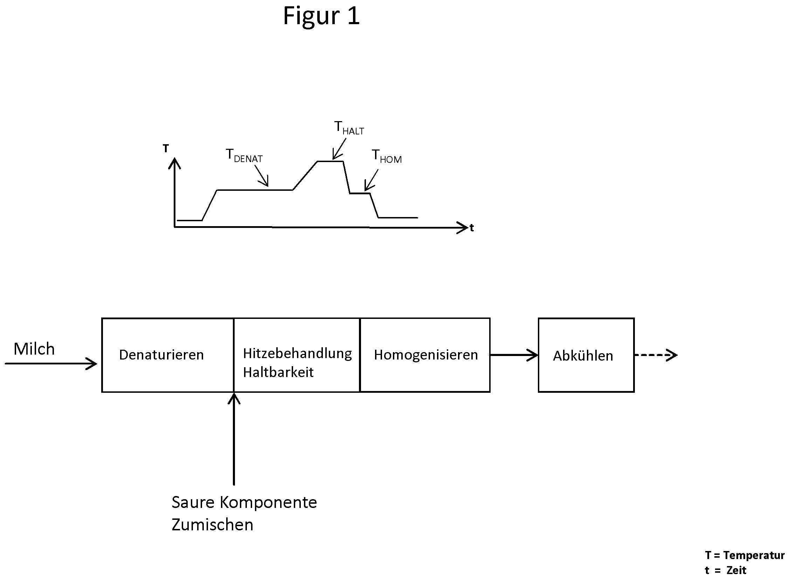

Figur 1 zeigt in einem schematisierten Blockdiagramm die wesentlichen Schritte des Verfahrens. Dabei wird Milch allein, also ohne Zugabe der sauren Komponente, einem Denaturierungsschritt unterzogen. Unmittelbar danach wird die saure Komponente zugemischt. Durch die Temperaturbehandlung ist dieser Mischschritt wenig anfällig für Ausflockungen. Das entstandene Gemisch wird dann einer Hitzebehandlung unterzogen, welche zur Erhöhung der Haltbarkeit notwendig ist. Das hitzebehandelte Gemisch kann dann homogenisiert und schliesslich abkühlen. Das entstandene Gemisch ist stabil gegenüber Ausflockungen.

Oberhalb des Blockdiagramms ist ein stark schematisierter Temperaturverlauf gezeigt. In diesem Fall erfolgt die Hitzebehandlung des Gemisches zur Erhöhung der Haltbarkeit bei einer höheren Temperatur T_{HALT} als die Denaturierung der Milch T_{DENAT}, während das Homogenisieren bei einer leicht tieferen Temperatur T_{HOM} als die Denaturierung erfolgt. Anschliessend fällt die Temperatur stark ab, was in diesem Fall einem Abkühlen auf eine niedrigere Temperatur beispielsweise zum Lagern entspricht.

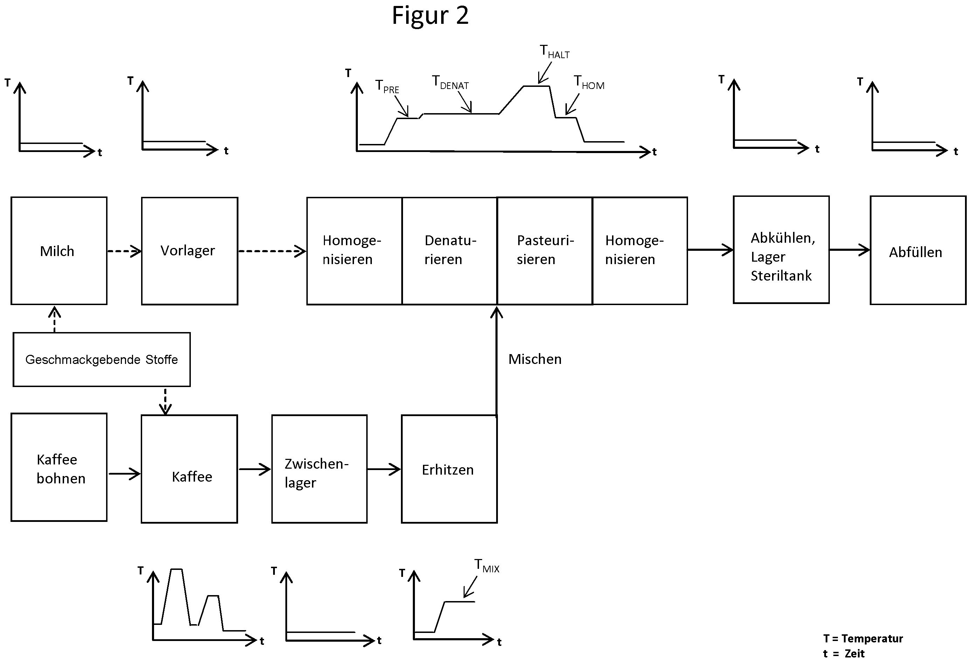

Figur 2 zeigt in einem schematisierten Blockdiagramm eine beispielhafte Ausführungsform des Verfahrens zur Herstellung eines kalten Kaffee-Milch-Gemischs mit zusätzlichen, optionalen Schritten. Der Übersicht halber ist auch hier ein beispielhafter Temperaturverlauf zu den jeweiligen Schritten gezeigt.

Diesem Verfahren liegt die folgende Rezeptur gemäss Tabelle 1 zugrunde:

| Tabelle 1 | |
|---|---|
| ZUTAT | ANTEIL IN REZEPTUR |
| Vollmilch | 75 g/100 g |
| Gebrühter Kaffee | 17 g/100 g |
| Rahm | 5 g/100 g |
| Zucker | 3 g/100 g |

Die gewünschte Milch wird bereitgestellt und bis zum gewünschten Beginn des Herstellungsverfahrens vorgelagert. Die Milch kann hierzu beispielsweise eine Temperatur in einem Bereich von 4°C bis 8°C haben. In diesem Fall wird die Milch in einem 4 °C Lagerraum gelagert.

Kaffee wird bereitgestellt, indem aus Kaffeebohnen ein Brühkaffee gewonnen wird. Hierzu werden die Bohnen zunächst bei einer relativ hohen Temperatur geröstet, beispielsweise in einem Bereich von 150 °C bis 240 °C. Die gerösteten Kaffeebohnen werden dann gemahlen, und dann bei einer etwas niedrigeren Temperatur gebrüht. Die Brühtemperatur kann beispielsweise in einem Bereich von 85 °C bis 97 °C liegen. In diesem Beispiel wird der Kaffee bei 88 °C bis 92 °C gebrüht. Der so hergestellte Kaffee wird dann zunächst in einem Zwischenlager bei einer Temperatur im Bereich von 4 °C bis 10 °C, in diesem Fall in einem 4 °C Lagerraum, gekühlt gelagert, bis er dem Milchstrom zugeführt werden kann. Entsprechend sinkt die Temperaturkurve des Kaffees.

Geschmacksgebende Stoffe können entweder der Milch oder dem Kaffee oder beiden, zugeführt werden. Dies ist durch die gestrichelten Pfeile angedeutet. In diesem beispielhaften Verfahren wird Zucker der Milchkomponente zugegeben und mit dieser gemeinsam dem Denaturierungsschritt unterzogen.

Die vorgelagerte Milch wird in diesem gezeigten Verfahren einer ersten "Vor-Homogenisierung" unterzogen und dazu auf die entsprechende Temperatur T_{PRE} vorgewärmt. Die Temperatur der Vorhomogenisierung T_{PRE} kann in diesem Fall in einem Bereich von 65°C und 75 °C liegen, beispielsweise bei einem Druck zwischen 150 und 200 bar. Anschliessend wird die Milch weiter erhitzt, und zwar auf die Denaturierungstemperatur T_{DENAT}, und es erfolgt eine Denaturierung der Milch beispielsweise für 120 Sek oder bis zu 300 Sek bei circa 90 °C.

Parallel dazu wird der zwischengelagerte Kaffee ebenfalls erhitzt auf eine Mischtemperatur T_{MIX}, und anschliessend an die Denaturierung der Milch zugemischt. Die Mischtemperatur T_{MIX} liegt in diesem Falle ebenfalls bei circa 90 °C.

Das nun entstandene Gemisch aus Milch und Kaffee wird anschliessend weiter erhitzt auf eine Pasteurisierungstemperatur T_{HALT}, die in diesem Fall in einem Bereich von 120 °C bis 133 °C liegen kann. Konkret wurden hier zur Pasteurisierung 72 °C für 15 Sek angelegt. Während dieser Hitzebehandlung werden vegetative Keime abgetötet und das Milchgemisch somit keimarm gemacht.

Unmittelbar anschliessend an die Pasteurisierung wird dann das Gemisch nochmals homogenisiert. In diesem Fall erfolgt die Homogenisierung bei einer Temperatur T_{HOM} in einem Bereich von 65 °C bis 70 °C, so dass das Gemisch für das Homogenisieren gekühlt wird. Das Kühlen kann beispielsweise mit einem Röhren- oder Plattenwärmetauscher erfolgen.

Die Homogenisierung des Gemisches erfolgt beispielsweise bei einem Druck in einem Bereich von 100 bis 150 bar. Anschliessend wird das homogenisierte Gemisch auf eine Lagertemperatur abgekühlt, die in einem Bereich von 5 °C bis 10 °C liegt und in einem Steriltank gelagert. Sobald dies gewünscht ist, kann dann das gekühlte Gemisch bei der Lagertemperatur abgefüllt werden. Das Abfüllen erfolgt in der Regel in solche Behälter, in denen das Gemisch-Endprodukt später verkauft werden soll.

Figur 3 zeigt in einem schematisierten Blockdiagramm eine Anlage 1, in welcher die verschiedenen Anlagenelemente zur Durchführung eines kontinuierlichen Verfahrens angeordnet sind. Diese Anlage 1 ist insbesondere für ein Verfahren geeignet, wie es zu Figur 2 beschrieben ist, bei dem als saure Komponente Kaffee verwendet wird, wobei mittels der Steuerung 10 die im folgenden beschriebenen Schritte mit den zuvor beschriebenen Einstellungen gesteuert werden.

In einem ersten Flüssigkeitsstrom wird zunächst die Milch aus einer Vorlagerung, beispielsweise einem Lagertank bei 4 °C entnommen und über eine oder mehrere Leitungen 6 für den Milchstrom zu der zweiten Homogenisierungs-Vorrichtung 11 geführt. Der Milch können beispielsweise direkt nach der Entnahme aus der Vorlagerung geschmacksgebende Stoffe zugeführt werden, wie im Zusammenhang mit Figur 2 beschrieben. Die zweite Homogenisierungs-Vorrichtung 11 ist ausgebildet, die zuvor beschriebene Vorhomogenisierung der Milch durchzuführen. In der hier beispielhaft beschriebenen Anlage wird die Milch nach der Lagerung zunächst über eine Heizvorrichtung 12, in diesem Fall einem Wärmetauscher geführt, mit welcher die Milch auf die Vorhomogenisierungs-Temperatur T_{PRE} vorgewärmt wird. Unmittelbar danach wird die Milch dann für die Vorhomogenisierung in die zweite Homogenisierungs-Vorrichtung 11 geleitet.

Anschliessend wird die nun vorhomogenisierte Milch über Leitungen 6 zunächst mittels eines Heizvorrichtung 12 auf die gewünschte Denaturierungstemperatur T_{DENAT} weiter erwärmt, und unmittelbar anschliessend zu der Denaturierungs-Vorrichtung 2 geleitet, wo sie der Denaturierungsbehandlung, wie zuvor beschrieben, unterzogen wird. Für die zu Figur 2 genannte Rezeptur beträgt das Volumen des Milchstroms 75 Volumenprozent (Vol%) des Gesamtvolumens. Das Gesamtvolumen ist dabei das Volumen des fertig gemischten Produkts aus Milch und der sauren Komponente, als in diesem Fall Kaffee. Die Leitungen 6 sind für den kontrollierten Transport des Milchstroms mit einem solchen Volumen entsprechend ausgebildet. Mittels der Steuerung 10 wird beispielsweise gewährleistet, dass bei den gegebenen Leitungscharakteristika und Durchflussgeschwindigkeiten die gewünschte Denaturierungszeit t_{DENAT} nicht wesentlich über-/ oder unterschritten wird. Dies gilt ebenso für die übrigen Behandlungszeiten.

Parallel dazu wird flüssiger, gebrühter Kaffee aus der Vorlagerung entnommen und mittels einer Heizvorrichtung 12 auf die gewünschte Mischtemperatur T_{MIX} vorgewärmt. Für die zu Figur 2 genannte Rezeptur beträgt das Volumen des Kaffeestroms 25 Volumenprozent (Vol%) des Gesamtvolumens. Dazu wird der Kaffee über entsprechend ausgebildete Kaffeestrom-Leitungen 7 zunächst zu der Heizvorrichtung 12 und dann weiter transportiert.

Unmittelbar nach der Denaturierungsbehandlung der Milch wird der Kaffee-Strom aus der Kaffeestrom-Leitung 7 mit dem vorgewärmten Kaffee und der Milchstrom aus der Milchstrom-Leitung 6 mittels einer Vorrichtung 9 zum Zusammenführen des Milchstroms und des Stroms der sauren Komponente zusammengeführt. Die nachfolgenden Vorrichtungen und Leitungen 8 sind an das entsprechende Endvolumen (100 Volumenprozent) steuerungstechnisch angepasst.

Das vorliegende Endgemisch wird dann über Leitungen 8 zu einer Vorrichtung 3 zum Durchführen einer Hitzebehandlung eines Gemisches zur Erhöhung von dessen Haltbarkeit geführt und dort der entsprechenden Hitzebehandlung unterzogen. In diesem Fall handelt es sich um eine Pasteurisierungsvorrichtung, genauer um einen Röhrenwärmetauscher. In diesem Fall ist die Temperatur T_{HALT} der Behandlung zur Erhöhung der Haltbarkeit höher als die Denaturierungstemperatur T_{DENAT} der Milch und die Mischtemperatur T_{MIX} des Kaffees. Daher wird das Gemisch für die Hitzebehandlung zur Erhöhung der Haltbarkeit über den Röhrenwärmetauscher auf die Temperatur T_{HALT} vorgewärmt und zur Pasteurisierung für die entsprechende Zeit gehalten.

Das pasteurisiere Gemisch aus Milch und Kaffee wird über Leitungen 8 nun der ersten Homogenisierungs-Vorrichtung 4 zugeführt. In diesem Fall ist dies ein zweistufiger Kolben-Homogenisator, mit welchen der zu Figur 2 beschriebene Druck p_{HOM} und bei der Temperatur T_{HOM} auf das Gemisch angelegt wird.

Da diese Homogenisierung bei einer tieferen Temperatur T_{HOM} erfolgt als die Pasteurisierung, wird das Gemisch, bevor es in die erste Homogenisierungs-Vorrichtung 4 gelangt, mittels einer Kühlvorrichtung 5', hier einem Wärmetauscher, von der Pasteurisierungstemperatur T_{HALT} auf die Homogenisierungstemperatur T_{HOM} abgekühlt und dann weiter zu der Homogenisierungs-Vorrichtung 4 geleitet.

Schliesslich wird das pasteurisierte und homogenisierte Milch-Kaffee-Gemisch von der Homogenisierungs-Vorrichtung 4 zu der Kühlvorrichtung 5, in diesem Fall ein Wärmetauscher, mittels entsprechender Gemischstrom-Leitungen 8 zugeführt und dort auf die gewünschte Lagertemperatur abgekühlt. Da in diesem Verfahren das Gemisch pasteurisiert wurde, ist eine Lagertemperatur von 4 °C gewählt. Die Lagerung kann nun beispielsweise in einem oder mehreren Steriltanks erfolgen. Es kann ebenfalls vorgesehen sein, dass unmittelbar nach dem Abkühlen das Abfüllen in die entsprechenden Container erfolgt.

Jeder der hier beschriebenen Schritte und die verwendeten Vorrichtungen sind unter im Wesentlichen vollständiger Kontrolle durch die Steuerung 10.

### Bezugszeichenliste

- 1: Anlage
- 2: Denaturierungs-Vorrichtung
- 3: Vorrichtung zum Durchführen einer Hitzebehandlung eines Gemisches zur Erhöhung von dessen Haltbarkeit,
- 4: erste Homogenisierungsvorrichtung
- 5,5': Kühlvorrichtung
- 6: Milchstrom-Leitungen
- 7: Leitungen für Saure-Komponente-Strom
- 8: Gemisch-Strom-Leitungen
- 9: Vorrichtung zum Zusammenführen des Milch- und Saure-Komponente-Stroms
- 10: Steuerung
- 11: zweite Homogenisierungsvorrichtung
- 12: Heizvorrichtung

## Patentansprüche

1. Verfahren zum Herstellen eines kalten Mischgetränks aus Milch und einer sauren Komponente, wobei das Verfahren die folgenden Schritte in dieser Reihenfolge umfasst:
• einen Denaturierungsschritt der Milch, wobei die Milch vor dem Mischen mit der sauren Komponente auf eine Denaturierungstemperatur T_{DENAT} erhitzt wird, die in einem Bereich von 72 °C bis 155 °C liegt, und bei der Denaturierungstemperatur T_{DENAT} für eine Denaturierungszeit t_{DENAT} gehalten wird, welche in einem Bereich von 30 Sek bis 1 h liegt,
• anschliessend Mischen der denaturierten Milch mit der sauren Komponente zu einem Gemisch,
• Hitzebehandeln des Gemischs zur Erhöhung der Haltbarkeit, wobei das Gemisch auf eine Temperatur T_{HALT} erhitzt wird, die in einem Bereich von 63 °C bis 155 °C liegt, und Halten des Gemischs bei der Temperatur T_{HALT} für eine Hitzebehandlungszeit t_{HALT},
• Homogenisieren des hitzebehandelten Gemischs bei einem Homogenisierungsdruck p_{HOM}, der in einem Bereich von 75 bar bis 275 bar liegt, und
• Abkühlen des Gemischs auf eine Temperatur, die in einem Bereich von 4°C bis 25°C liegt,
wobei die Milch und die saure Komponente in einem solchen Mischungsverhältnis gemischt werden, dass das Gemisch nach der Homogenisierung und dem Abkühlen einen pH-Wert aufweist, der in einem Bereich von 5,8 bis 7,0 liegt.

2. Verfahren nach Anspruch 1, **dadurch gekennzeichnet, dass** mittels des Denaturierungsschritts der Milch ein Denaturierungsgrad eines nativen Molkeproteins β-Lactoglobulin B erzeugt, welcher in einem Bereich von 60 % bis 100 % liegt.

3. Verfahren nach Anspruch 1, **dadurch gekennzeichnet, dass** die Denaturierungszeit t_{DENAT} in einem Bereich von 60 Sek bis 420 Sek, vorzugsweise in einem Bereich von 100 Sek bis 320 Sek.

4. Verfahren nach Anspruch 3, **dadurch gekennzeichnet, dass** der Denaturierungsschritt der Milch bei einer Denaturierungstemperatur T_{DENAT} in einem Bereich von 86 °C bis 95 °C durchgeführt wird.

5. Verfahren nach einem der vorhergehenden Ansprüche, **dadurch gekennzeichnet, dass** das Homogenisieren des hitzebehandelten Gemischs bei einer Temperatur T_{HOM} erfolgt, die in einem Bereich von 65 °C bis 80 °C liegt.

6. Verfahren nach einem der Ansprüche 1 bis 5, **dadurch gekennzeichnet, dass** das Hitzebehandeln des Gemischs eine Pasteurisierung ist, wobei die Temperatur T_{HALT} in einem Bereich von 63 °C bis 133 °C und die Hitzebehandlungszeit t_{HALT} in einem Bereich von 2 Sek bis 2000 Sek liegt.

7. Verfahren nach einem der Ansprüche 1 bis 5, **dadurch gekennzeichnet, dass** das Hitzebehandeln des Gemischs eine Ultrahocherhitzung ist, wobei die Temperatur T_{HALT} in einem Bereich von 130 °C bis 155 °C und die Hitzebehandlungszeit t_{HALT} in einem Bereich von 1 Sek bis 30 Sek liegt.

8. Verfahren nach einem der vorhergehenden Ansprüche, **dadurch gekennzeichnet, dass** die Milch unmittelbar vor dem Denaturierungsschritt vorhomogenisiert wird, wobei der Vorhomogenisierungsdruck p_{PRE} in einem Bereich von 100 bar bis 300 bar, vorzugsweise in einem Bereich von 150 bis 250 bar liegt.

9. Verfahren nach Anspruch 8, **dadurch gekennzeichnet, dass** das Vorhomogenisieren bei einer Temperatur T_{PRE} erfolgt, die in einem Bereich von 65 °C bis 80 °C liegt.

10. Verfahren nach einem der vorhergehenden Ansprüche, dass die Milch und/oder die saure Komponente geschmackgebende Stoffe umfasst.

11. Verfahren nach einem der vorhergehenden Ansprüche, **dadurch gekennzeichnet, dass** die Milch und die saure Komponente in einem solchen Mischungsverhältnis gemischt werden, dass das Gemisch nach der Homogenisierung und dem Abkühlen einen pH Wert aufweist, der in einem Bereich von 6,2 bis 6,8 liegt, vorzugsweise in einem Bereich von 6,3 bis 6,6 liegt, und/oder dass das Gemisch nach der Homogenisierung und dem Abkühlen einen Säuregrad aufweist, der in einem Bereich von 4,5 °SH bis 12,5 °SH, vorzugsweise in einem Bereich von 5,5 °SH bis 11,9 °SH liegt.

12. Verfahren nach einem der vorhergehenden Ansprüche, **dadurch gekennzeichnet, dass** das Gemisch nach dem Abkühlen bei einer Lagertemperatur zunächst gelagert und dann abgefüllt wird, oder dass das Gemisch nach dem Abkühlen direkt abgefüllt wird.

13. Verfahren nach Anspruch 12, **dadurch gekennzeichnet, dass** die Lagertemperatur in einem Bereich von 4°C bis 25°C liegt, und/oder das das Abfüllen bei der Lagertemperatur erfolgt.

14. Verfahren nach einem der vorhergehenden Ansprüche, **dadurch gekennzeichnet, dass** die saure Komponente ausgewählt ist aus einer Gruppe, welche umfasst:
Fruchtsaft, Fruchtsaftkonzentrat, Fruchtmark, Fruchtpüree sowie Fruchtzubereitungen daraus, Gemüsesaft, Gemüsesaftkonzentrat, Getreide und weitere fermentiert natürliche Zutaten sowie Zubereitungen daraus, Kaffee und flüssiger Kaffee-Extrakt, sowie Zubereitungen daraus, und/oder Tee, Teeaufguss und flüssiger Tee-Extrakt sowie Zubereitungen daraus.

15. Verfahren nach einem der vorhergehenden Ansprüche, **dadurch gekennzeichnet, dass** die saure Komponente Kaffee oder ein flüssiger Kaffee-Extrakt ist.

16. Verfahren nach Anspruch 15, **dadurch gekennzeichnet, dass** der Kaffee vor dem Mischen mit der Milch getrennt gelagert und zum Mischen auf eine Mischtemperatur T_{MIX} vorgewärmt wird.

17. Verfahren nach Anspruch 16, **dadurch gekennzeichnet, dass** die Mischtemperatur T_{MIX} im Wesentlichen der Denaturierungstemperatur T_{DENAT} der Milch +/- 15 °C entspricht.

## Claims

1. Method for producing a cold mixed beverage of milk and an acidic component, wherein the method comprises the following steps in this order:
• a denaturing step of the milk, wherein the milk is heated to a denaturing temperature T_{DENAT} which is in a range of 72°C to 155°C prior to mixing with the acidic component and the milk is maintained at the denaturing temperature T_{DENAT} for a denaturing period t_{DENAT}, which is in a range of 30 sec to 1 h.
• subsequently mixing the denatured milk with the acidic component to a mixture,
• heat treating the mixture to increase shelf life, wherein the mixture is heated to a temperature T_{HALT} which is in a range of 63 °Cto 155 °C, and maintaining the mixture at the temperature T_{HALT} for a heat treatment period t_{HALT},
• homogenizing the heat-treated mixture at a homogenizing pressure p_{HOM} which is in a range of 75 bar to 275 bar, and
• cooling the mixture to a temperature that is in a range of 4°C to 25°C,
wherein the milk and the acidic component are mixed in such a mixing ratio that the mixture, after homogenization and cooling, has a pH value which is in a range of 5,8 to 7,0.

2. Method according to claim 1, **characterized in that** a degree of denaturation of a native whey protein β-lactoglobulin B, which is in a range from 60% to 100%, is produced by means of the denaturing step of the milk.

3. Method according to claim 1, **characterized in that** the denaturing period t_{DENAT} is in a range of 60 sec to 420 sec, preferably in a range of 100 sec to 320 sec.

4. Method according to claim 3, **characterized in that** the denaturing step of the milk is carried out at a denaturing temperature T_{DENAT} in a range of 86°C to 95°C.

5. Method according to one of the preceding claims, **characterized in that** the homogenization of the heat-treated mixture is carried out at a temperature T_{HOM} which is in a range of 65°C to 80°C.

6. Method according to one of claims 1 to 5, **characterized in that** the heat treatment of the mixture is a pasteurization, wherein the temperature T_{HALT} is in a range of 63°C to 133°C and the heat treatment period t_{HALT} is in a range of 2 sec to 2000 sec.

7. Method according to one of claims 1 to 5, **characterized in that** the heat treatment of the mixture is an ultra-high temperature heating, wherein the temperature T_{HALT} is in a range of 130°C to 155°C and the heat treatment period t_{HALT} is in a range of 1 sec to 30 sec.

8. Method according to one of the preceding claims, **characterized in that** the milk is prehomogenized immediately prior to the denaturing step, wherein the prehomogenization pressure p_{PRE} is in a range of 100 bar to 300 bar, preferably in a range of 150 to 250 bar.

9. Method according to claim 8, **characterized in that** the prehomogenization is carried out at a temperature T_{PRE} which is in a range of 65°C to 80°C.

10. Method according to one of the preceding claims, wherein the milk and/or the acidic component comprises flavoring agents.

11. Method according to one of the preceding claims, **characterized in that** the milk and the acidic component are mixed in such a mixing ratio that the mixture, after the homogenization and the cooling, has a pH value that is in a range of 6,2 to 6,8, preferably in a range of 6,3 to 6,6, and/or **in that** the mixture, after the homogenization and the cooling, has a degree of acidity which is in a range of 4,5°SH to 12,5 °SH, preferably in a range of 5,5 °SH to 11,9 °SH.

12. Method according to one of the preceding claims, **characterized in that** the mixture is first stored after the cooling at a storage temperature and then filled, or **in that** the mixture is filled directly after the cooling.

13. Method according to claim 12, **characterized in that** the storage temperature is in a range of 4°C to 25°C, and/or **in that** the filling is performed at the storage temperature.

14. Method according to one of the preceding claims, **characterized in that** the acidic component is selected from a group comprising:
fruit juice, fruit juice concentrate, fruit pulp, fruit puree and fruit preparations thereof, vegetable juice, vegetable juice concentrate, cereals and other fermented natural ingredients and preparations thereof, coffee and liquid coffee extract and preparations thereof, and/or tea, tea infusion and liquid tea extract, and preparations thereof.

15. Method according to one of the preceding claims, **characterized in that** the acidic component is coffee or a liquid coffee extract.

16. Method according to claim 15, **characterized in that** the coffee is stored separately before the mixing with the milk and is preheated to a mixing temperature T_{MIX} for mixing.

17. Method according to claim 16, **characterized in that** the mixing temperature T_{MIX} essentially corresponds to the denaturing temperature T_{DENAT} of the milk +/-15°C.

## Revendications

1. Procédé de préparation d'un cocktail froid à partir de lait et d'un composant acide, dans lequel le procédé comprend les étapes suivantes, dans l'ordre indiqué :
- une étape de dénaturation du lait, dans laquelle le lait est chauffé, avant le mélange avec le composant acide, à une température de dénaturation T_{DENAT}, qui se situe dans une plage de 72 °C à 155 °C, puis est maintenu à la température de dénaturation T_{DENAT} pendant une durée de dénaturation t_{DENAT}, qui se situe dans une plage de 30 secondes à 1 heure,
- ensuite, le mélange du lait dénaturé avec le composant acide pour former un mélange,
- le traitement thermique du mélange pour augmenter la durée de conservation, dans lequel le mélange est chauffé à une température T_{HALT}, qui se situe dans une plage de 63 °C à 155 °C, et le maintien du mélange à la température T_{HALT} pendant une durée de traitement thermique t_{HALT},
- l'homogénéisation du mélange traité thermiquement à une pression d'homogénéisation p_{HOM}, qui se situe dans une plage de 75 bar à 275 bar, et
- le refroidissement du mélange à une température qui se situe dans une plage de 4 °C à 25 °C,
dans lequel le lait et le composant acide sont mélangés selon un rapport de mélange tel que le mélange, après l'homogénéisation et le refroidissement, présente une valeur de pH qui se situe dans une plage de 5,8 à 7,0.

2. Procédé selon la revendication 1, **caractérisé en ce qu'**au moyen de l'étape de dénaturation du lait, on génère un degré de dénaturation d'une protéine de lactosérum native de β-lactoglobuline B qui se situe dans une plage de 60 % à 100 %.

3. Procédé selon la revendication 1, **caractérisé en ce que** la durée de dénaturation t_{DENAT} se situe dans une plage de 60 secondes à 420 secondes, de préférence dans une plage de 100 secondes à 320 secondes.

4. Procédé selon la revendication 3, **caractérisé en ce que** l'étape de dénaturation du lait est réalisée à une température de dénaturation T_{DENAT} comprise dans une plage de 86 °C à 95 °C.

5. Procédé selon l'une des revendications précédentes, **caractérisé en ce que** l'homogénéisation du mélange traité thermiquement est réalisée à une température T_{HOM} qui se situe dans une plage de 65 °C à 80 °C.

6. Procédé selon l'une des revendications 1 à 5, **caractérisé en ce que** le traitement thermique du mélange est une pasteurisation, la température T_{HALT} se situant dans une plage de 63 °C à 133 °C, et la durée de traitement thermique t_{HALT}, dans une plage de 2 secondes à 2 000 secondes.

7. Procédé selon l'une des revendications 1 à 5, **caractérisé en ce que** le traitement thermique du mélange est un chauffage à ultra haute température, la température T_{HALT} se situant dans une plage de 130 °C à 155 °C et la durée de traitement thermique t_{HALT}, dans une plage de 1 seconde à 30 secondes.

8. Procédé selon l'une des revendications précédentes, **caractérisé en ce que** le lait est pré-homogénéisé directement avant l'étape de dénaturation, la pression de pré-homogénéisation p_{PRE} se situant dans une plage de 100 bar à 300 bar, de préférence dans une plage de 150 à 250 bar.

9. Procédé selon la revendication 8, **caractérisé en ce que** la pré-homogénéisation est réalisée à une température T_{PRE} qui se situe dans une plage de 65 °C à 80 °C.

10. Procédé selon l'une des revendications précédentes, le lait et/ou le composant acide comprenant des agents de sapidité.

11. Procédé selon l'une des revendications précédentes, **caractérisé en ce que** le lait et le composant acide sont mélangés selon un rapport de mélange tel que le mélange, après l'homogénéisation et le refroidissement, présente une valeur de pH qui se situe dans une plage de 6,2 à 6,8, de préférence dans une plage de 6,3 à 6,6, et/ou **en ce que** le mélange, après l'homogénéisation et le refroidissement, présente un degré d'acidité qui se situe dans une plage de 4,5 °SH à 12,5 °SH, de préférence dans une plage de 5,5 °SH à 11,9 °SH.

12. Procédé selon l'une des revendications précédentes, **caractérisé en ce que** le mélange, après le refroidissement, est d'abord entreposé à une température de stockage, puis embouteillé, ou **en ce que** le mélange est embouteillé directement après le refroidissement.

13. Procédé selon la revendication 12, **caractérisé en ce que** la température de stockage se situe dans une plage de 4 °C à 25 °C, et/ou **en ce que** l'embouteillage se fait à la température de stockage.

14. Procédé selon l'une des revendications précédentes, **caractérisé en ce que** le composant acide est sélectionné dans un groupe qui comprend les éléments suivants :
jus de fruits, jus de fruit concentré, concentré de purée de fruits, purée de fruits et préparations à base de fruits, jus de légumes, jus de légume concentré, céréales et autres ingrédients naturels fermentés, ainsi que préparations à base de celles-ci, café et extrait liquide de café, ainsi que préparations à base de ceux-ci, et/ou thé, infusions de thé, extrait liquide de thé et préparations à base de ceux-ci.

15. Procédé selon l'une des revendications précédentes, **caractérisé en ce que** le composant acide est du café ou un extrait liquide de café.

16. Procédé selon la revendication 15, **caractérisé en ce que** le café est entreposé séparément avant le mélange avec le lait, et est préchauffé à une température de mélange T_{MIX} pour le mélange.

17. Procédé selon la revendication 16, **caractérisé en ce que** la température de mélange T_{MIX} correspond essentiellement à la température de dénaturation T_{DENAT} du lait ± 15 °C.
